# EUROPÄISCHE PATENTSCHRIFT

(11) **EP 2 508 381 B1**
(45) Veröffentlichungstag und Bekanntmachung des Hinweises auf die Patenterteilung: **02.07.2014**
(21) Anmeldenummer: 11189719.5
(22) Anmeldetag: 18.11.2011
(51) Int. Cl.: B60K 15/03

(54) **Kraftfahrzeug mit einer Drucktankvorrichtung**
Vehicle with a pressure tank device
Vehicul avec un dispositif de réservoir de pression

(30) Priorität: 05.04.2011 US 471865 P
(43) Veröffentlichungstag der Anmeldung: 10.10.2012
(73) Patentinhaber: Magna Steyr Fahrzeugtechnik AG & Co KG, 8041 Graz (AT)
(72) Erfinder: Erlacher, Manuel, 9545 Radenthein (AT); Rodler, Martin, 8160 Krottendorf (AT); Zachnegger, Harald, 8041 Graz (AT)
(74) Vertreter: Rausch, Gabriele

(56) Entgegenhaltungen:
- EP-A2- 1 092 612
- WO-A1-02/078993

## Beschreibung

Die vorliegende Erfindung betrifft ein Kraftfahrzeug mit einer Drucktankvorrichtung für ein Kraftfahrzeug. Drucktanks werden in Kraftfahrzeugen seit längerer Zeit dazu eingesetzt druckbeaufschlagte Treibstoffe, die zum Betrieb des Fahrzeuges dienen, mit dem Kraftfahrzeug mitzuführen. Derartige Treibstoffe die in Drucktanks gelagert werden müssen, sind insbesondere komprimiertes Erdgas (compressed natural gas, CNG) oder auch druckverflüssigtes Gas (liquified petroleum gas, LPG).

Die Speicherung solcher druckbeaufschlagter Treibstoffe erfolgt, wie im Stand der Technik bekannt, in zylinderförmigen Behältern. Durch die zylindrische Form wird eine hohe Druckbeständigkeit erreicht, sodass sich ein relativ großes Volumen an zu transportierendem Treibstoff in einem Behälter mit möglichst geringer Wandstärke und möglichst geringem Gewicht transportieren läßt. Die zylindrischen Behälter werden in der Regel unter dem Fahrzeugboden angeordnet, in sogenannter Unterflurbauweise, oder auch im Kofferraum des Kraftfahrzeuges mitgeführt.

Im Stand der Technik, beispielsweise aus der US 5370418, ist auch bekannt mehrere zylindrische Behälter in einem Kraftfahrzeug vorzusehen und so das zu transportierende Volumen auf mehrere Tanks aufzuteilen, wobei Zugangseinrichtungen wie Öffnungen, Hähne, Ventile und Leitungen jeweils für jeden der zylindrischen Tanks eingerichtet sein müssen. Weiters ist aus der WO 2008/064757 A1 bekannt einen zylindrischen Drucktank teilweise konisch auszuführen, um eine größere Menge Kraftstoff mitführen zu können.

Die DE 195 47 752 B4 offenbart einen Kraftstoffbehälter für druckbeaufschlagte Gase der aus einer Rohrleitung aufgebaut ist, die aufgewickelt oder gefaltet wird. Derartige Wicklungen und Faltungen stellen einen nicht unerheblichen Aufwand für die Fertigung dar und die entsprechenden Behälter sind nicht optimal an vorhandene Bauräume im Fahrzeug angepasst.

Eine gattungsgemäße Drucktankvorrichtung ist aus EP 1 092 612 bekannt.

Es ist eine Aufgabe der Erfindung, Drucktankvorrichtungen in dieser Hinsicht zu verbessern und insbesondere eine Drucktankvorrichtung vorzuschlagen, die den vorhandenen Bauraum in einem Kraftfahrzeug optimal nutzt, dabei zur Speicherung von Treibstoffen unter Druck geeignet ist und einfach zu fertigen ist.

Die Lösung der Aufgabe erfolgt durch eine Drucktankvorrichtung gemäß Anspruch 1.

Weiterbildungen der Erfindung sind in den abhängigen Ansprüchen, der Beschreibung sowie den beigefügten Zeichnungen angegeben.

Vorteilhaft ist es für eine erfindungsgemäße Drucktankvorrichtung, wenn an dem ersten oder dem zweiten Drucktankteil eine einzige Zugangseinrichtung zu dem zusammenhängenden Tankvolumen angeordnet ist. Da die beiden Drucktankteile ja ein gemeinsames Volumen umschließen ist es nicht erforderlich mehrere Bauteile wie Sicherheitsventile oder sonstige Sicherheitsvorrichtungen, Zugangshähne, Verbindungselemente und dergleichen vorzusehen. Hierdurch können Kosten für diese Bauelemente eingespart werden.

Eine vorteilhafte Anordnung der Drucktankteile im Fahrzeug besteht darin, dass der erste und/oder der zweite Drucktankteil im Bereich des Fahrzeugbodens angeordnet sind. Bei einer Unterbringung der Drucktankanordnung in Unterflurbauweise kann der Bauraum nahe des Fahrzeugbodens gut ausgenützt werden.

Bei einer erfindungsgemäßen Drucktankvorrichtung kann auch zumindest einer der Drucktankteile mindestens eine Ausprägung aufweisen, insbesondere zur Aufnahme eines Fahrzeugsitzes. Durch die Ausbildung von Ausprägungen wie Dellen, Einbuchtungen, Sicken und ähnlichen Ausformungen können die Drucktankteile noch besser an vorhandenes freies Volumen im Fahrzeug angepasst werden. Insbesondere können durch Ausprägungen unter Fahrzeugsitzen die Zylinder der Drucktankteile einen Umfang aufweisen, der ohne derartige Ausprägungen und bei festgelegter Einbauhöhe der Fahrzeugsitze nicht untergebracht werden könnte. An den Drucktankteilen können zusätzlich auch Befestigungsvorrichtungen vorgesehen sein, beispielsweise zur Befestigung von Fahrzeugsitzen oder einer Rücksitzbank oder zur Anbindung an die Karosserie des Fahrzeuges.

In einer weiteren Ausführung umfasst eine erfindungsgemäße Drucktankvorrichtung einen Zusatztank, welcher ein Tankvolumen umschließt das vom Tankvolumen des ersten und zweiten Drucktankteils getrennt ist. Der Zusatztank stellt also ein getrenntes Tankvolumen zur Verfügung, das auch über eigene Zugangseinrichtungen zugänglich gemacht werden muss. In diesem Zusatztank ist auch ein Treibstoff bereitstellbar, der sich von dem Treibstoff unterscheidet, welcher in den zumindest zwei Drucktankteilen bereitgestellt wird. Diese Ausführung eignet sich daher besonders für bivalente Fahrzeuge, die zumindest zwei verschiedene Treibstoffe für deren Antrieb nutzen.

In einer Drucktankvorrichtung mit Zusatztank, weist der Zusatztank vorzugsweise eine längliche Form auf, beispielsweise eine Zylinder- oder Quaderform und ist vorzugsweise parallel zum ersten Drucktankteil angeordnet. Insbesondere kann der Zusatztank am ersten Drucktankteil anliegend angeordnet sein. Der Zusatztank kann dann platzsparend zusammen mit einem der Drucktankteile unterhalb der Rücksitzbank oder auch im Bereich des Kofferraumes angeordnet sein.

Die Erfindung wird im Folgenden beispielhaft unter Bezugnahme auf die Zeichnungen beschrieben.
- Fig. 1a: ist eine Draufsicht auf eine erfindungsgemäße Drucktankvorrichtung.
- Fig. 1b: ist eine 3D-Darstellung einer erfindungsgemäßen Drucktankvorrichtung gemäß Fig. 1a.
- Fig. 2a: ist eine Seitenansicht auf ein Fahrzeug mit einer erfindungsgemäßen Drucktankvorrichtung.
- Fig. 2b: ist eine Draufsicht auf ein Fahrzeug mit einer erfindungsgemäßen Drucktankvorrichtung gemäß Fig. 1a.
- Fig. 3: ist eine 3D-Darstellung einer weiteren erfindungsgemäßen Drucktankvorrichtung.
- Fig. 4a: ist eine Seitenansicht auf ein Fahrzeug mit einer weiteren erfindungsgemäßen Drucktankvorrichtung.
- Fig. 4b: ist eine Draufsicht auf ein Fahrzeug mit einer erfindungsgemäßen Drucktankvorrichtung gemäß Fig. 2a.
- Fig. 5a: ist eine Draufsicht auf eine weitere erfindungsgemäße Drucktankvorrichtung.
- Fig. 5b: ist eine 3D-Darstellung einer erfindungsgemäßen Drucktankvorrichtung gemäß Fig. 3a.
- Fig. 6a: ist eine Draufsicht auf eine weitere erfindungsgemäße Drucktankvorrichtung.
- Fig. 6b: ist eine 3D-Darstellung einer erfindungsgemäßen Drucktankvorrichtung gemäß Fig. 4a.
- Fig. 7: ist eine 3D-Darstellung einer weiteren erfindungsgemäßen Drucktankvorrichtung.
- Fig. 8: ist eine 3D-Darstellung einer weiteren erfindungsgemäßen Drucktankvorrichtung.
- Fig. 9: ist eine 3D-Darstellung einer weiteren erfindungsgemäßen Drucktankvorrichtung.

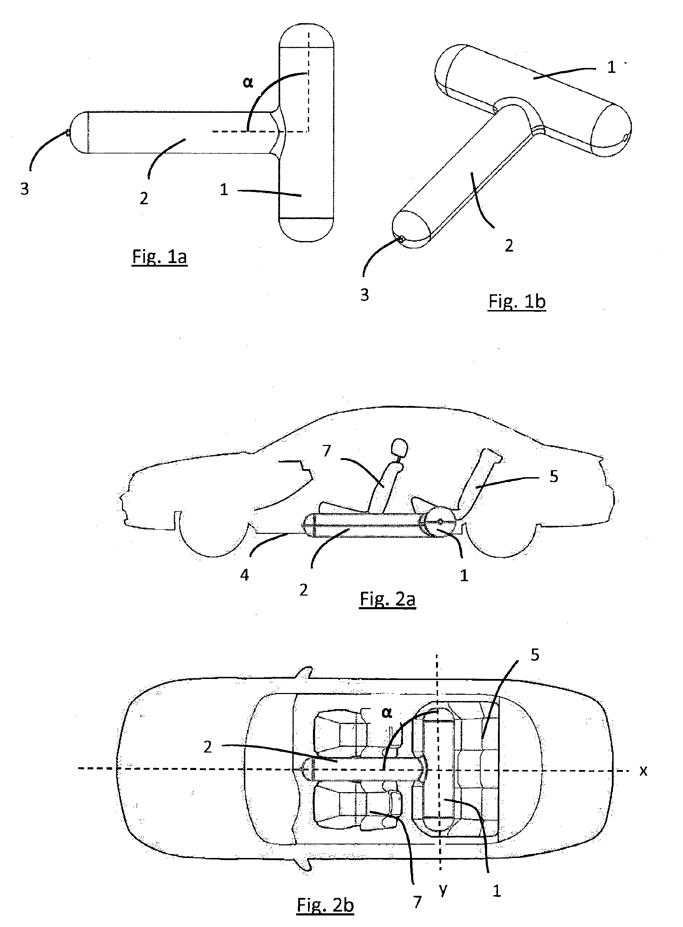

Die Fig. 1a-1b zeigen eine erfindungsgemäße Drucktankvorrichtung mit einem ersten zylindrischen Drucktankteil 1 und einem zweiten zylindrischen Drucktankteil 2, der in einem Winkel α zum ersten Drucktankteil 1 angeordnet ist. Die beiden Drucktankteile sind in einem Übergangsbereich miteinander verbunden, sodass ein einziger Drucktank gebildet wird und von beiden Drucktankteilen ein gemeinsames Tankvolumen umschlossen wird. In der dargestellten Ausführung ist der Übergangsbereich zwischen den beiden Drucktankteilen 1 und 2 mit einer Spange, Schelle oder ähnlichem Verstärkungselement ausgestattet. Eine Zugangseinrichtung 3 zum gemeinsamen Drucktankvolumen ist in den Fig. 1 am zweiten Drucktankteil 2 angeordnet.

In den Fig. 2a-2b ist eine erfindungsgemäße Drucktankvorrichtung in einem Kraftfahrzeug in Einbaulage dargestellt. Die Drucktankvorrichtung umfasst einen ersten Drucktankteil 1 der in Fahrzeugquerrichtung y angeordnet ist und einen rechtwinkelig dazu angeordneten zweiten Drucktankteil 2 der in Fahrzeuglängsrichtung x angeordnet ist. Die Drucktankteile können beispielsweise aus faserverstärktem Kunststoff (CFK) oder auch aus Stahl hergestellt sein. Der quer liegende Drucktankteil 1 ist unterhalb einer Rücksitzbank 5 angeordnet, der zweite Drucktankteil 2 steht im rechten Winkel zum ersten Drucktankteil und verläuft entlang des Mitteltunnels im Bereich des Bodens 4 in Fahrzeuglängsrichtung, zwischen den Vordersitzen 7. Der Winkel zwischen erstem und zweitem Drucktankteil α beträgt in dieser Ausführung 90 Grad.

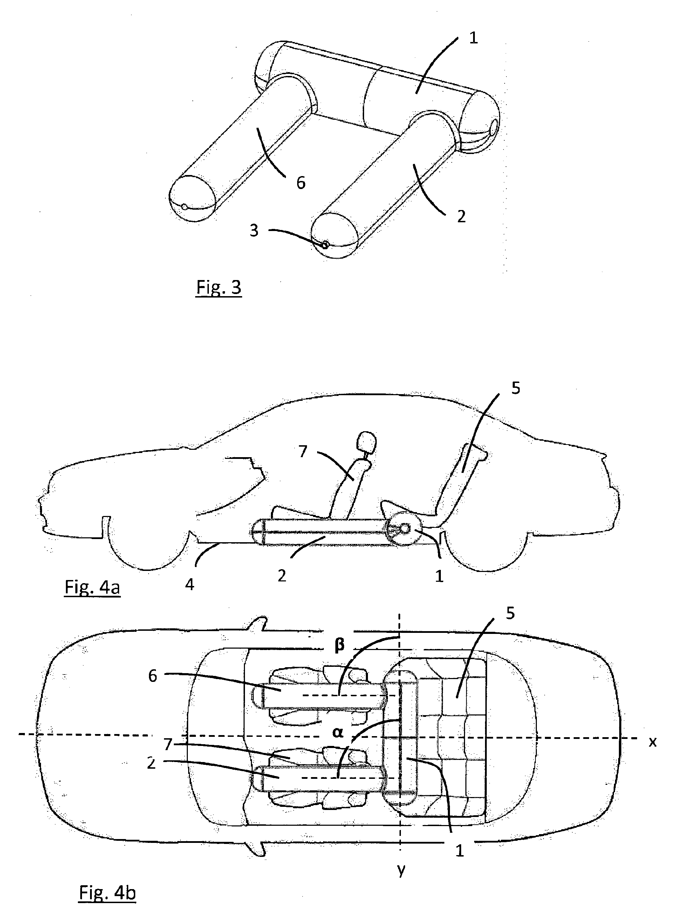

In der Fig. 3 ist eine weitere Ausführungsform einer erfindungsgemäßen Drucktankvorrichtung dargestellt. Diese weist zusätzlich zum ersten und zweiten Drucktankteil 1 bzw. 2 einen dritten zylindrischen Drucktankteil 6 auf. Der dritte Drucktankteil 6 ist, so wie auch der zweite Drucktankteil 2, in einem Winkel zum ersten Drucktankteil 1 angeordnet. In der dargestellten Ausführungsform verlaufen der zweite und der dritte Drucktankteil parallel.

In den Fig. 4a-4b ist eine Drucktankvorrichtung gemäß Fig. 3 in einem Fahrzeug verbaut. Die Vorrichtung weist zusätzlich zum in Längsrichtung x verlaufenden zweiten Drucktankteil 2 einen dritten Drucktankteil 6 auf, der ebenfalls in Fahrzeuglängsrichtung angeordnet ist. Zwischen drittem Drucktankteil 6 und erstem Drucktankteil 1 wird ein Winkel β eingeschlossen. Die beiden Drucktankteile verlaufen im Bereich des Fahrzeugbodens 4. Jeder der beiden längsverlaufenden zylindrischen Tankteile ist im Bereich unterhalb eines Vordersitzes 7 angeordnet.

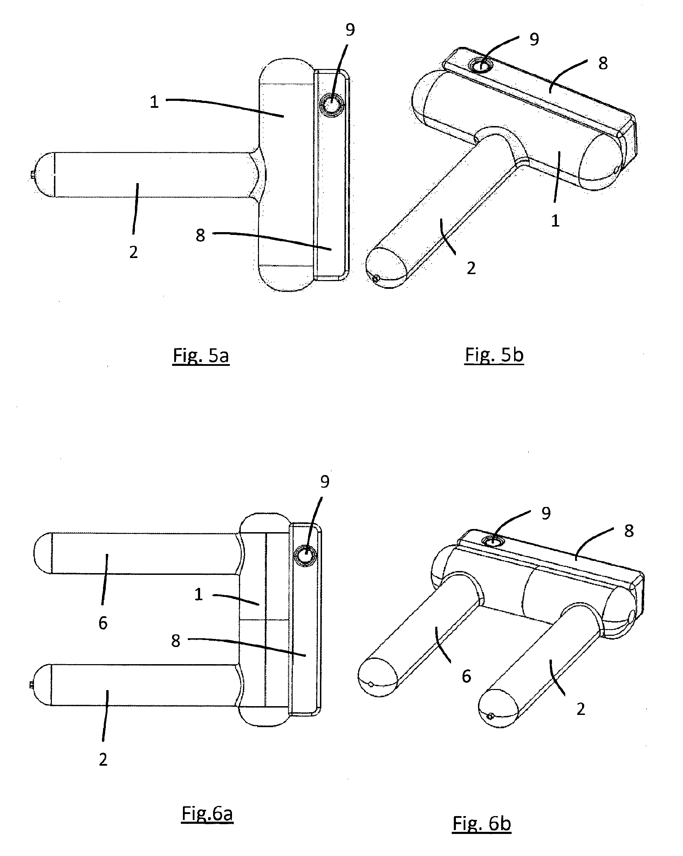

Wie aus den Fig. 5a und 5b hervorgeht, kann zusätzlich zum erfindungsgemäßen Drucktank aus zumindest zwei Drucktankteilen ein Zusatztank 8 vorgesehen sein, der ein eigenes Tankvolumen umschließt. Das Volumen des Zusatztanks 8 weist daher eine eigene Zugangsöffnung 9 auf. Der Zusatztank liegt in der dargestellten Ausführung parallel zum querliegenden Drucktankteil 1 und kann daher ebenfalls unter bzw. auch hinter der Rücksitzbank 5 Platz finden.

Die Fig. 6a - 6b stellen eine Ausführung ähnlich der Fig. 5a-5b dar, wobei jedoch außer dem Zusatztank 8 auch ein dritter Drucktankteil 6 vorgesehen ist, wie in der Ausführung nach Fig. 3. Das zur Verfügung stehende Tankvolumen umfasst daher drei Drucktankteile 1, 2, 6 und den Zusatztank 8 in welchem ein zweiter Kraftstoff aufbewahrt werden kann.

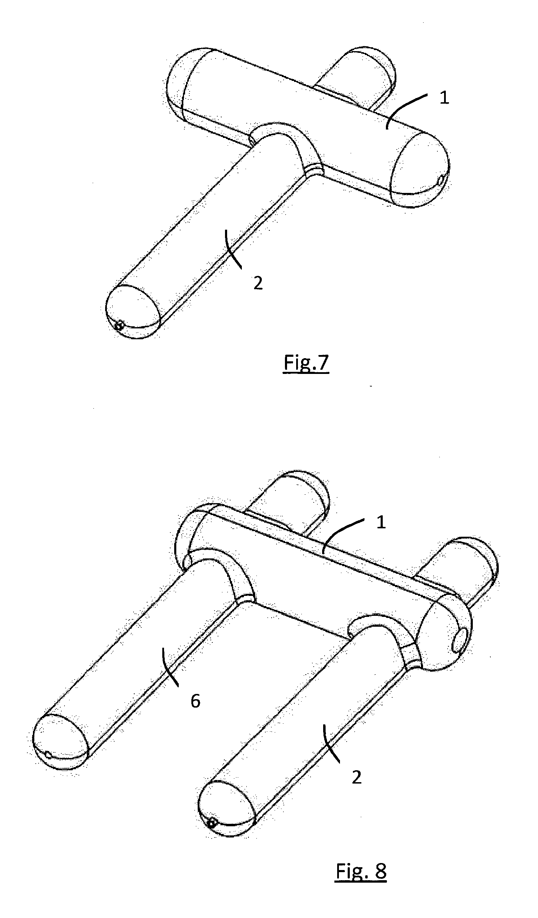

Wie in der Fig. 7 ersichtlich kann die T-förmige Ausführung des Drucktanks auch so ausgebildet sein, dass der längs-verlaufende Drucktankteil 2 sich zusätzlich hinter dem quer-verlaufenen Drucktankteil 1 weiter erstreckt, so dass eine kreuzförmige Anordnung des Drucktanks erreicht wird. Auf diese Weise kann beispielsweise der verlängernde Abschnitt hinter dem Drucktankteil 1 in einem Kofferraum untergebracht werden. Ähnlich können auch, wie in Fig. 8 dargestellt, in der Ausführung mit zwei längs-verlaufenden Drucktankteilen 2 und 6 sich diese zusätzlich zur Erstreckung nach vorn und somit beispielsweise unter Vordersitze auch nach hinten, in den Bereich eines Kofferraumes hinein erstrecken.

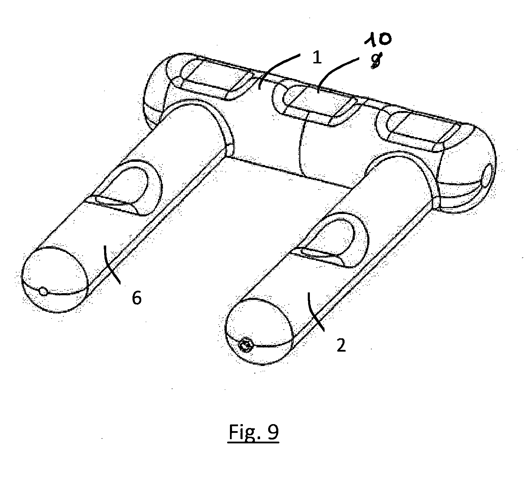

In der Fig. 9 ist eine weitere erfindungsgemäße Drucktankvorrichtung mit drei Drucktankteilen 1, 2, 6 dargestellt, wobei die Drucktankteile Ausprägungen 10 aufweisen, die der besseren Aufnahme von Fahrzeugsitzen dienen. Die Fahrzeugsitze können sich durch diese Ausformungen gleichsam an die Drucktankvorrichtung anschmiegen. Die Drucktankvorrichtung kann daher bei Verlegung unter den Fahrzeugsitzen ein größeres Volumen umschließen, da die Zylinder der Drucktankteile durch die Ausprägungen 10 unter den Fahrzeugsitzen über die Unterkante der Fahrzeugsitze reichen können.

Die Erfindung ermöglicht somit eine Drucktankvorrichtung so auszubilden, dass freier Bauraum in einem Fahrzeug optimal ausgenutzt wird.

### Bezugszeichenliste

- 1: erster Drucktankteil
- 2: zweiter Drucktankteil
- 3: Zugangseinrichtung
- 4: Fahrzeugboden
- 5: Rücksitzbank
- 6: dritter Drucktankteil
- 7: Vordersitz
- 8: Zusatztank
- 9: Zugangsöffnung
- 10: Ausprägung

- x: Fahrzeuglängsrichtung
- y: Fahrzeugquerrichtung

- α: Winkel zwischen erstem und zweitem Drucktankteil
- β: Winkel zwischen erstem und drittem Drucktankteil

## Patentansprüche

1. Drucktankvorrichtung für ein Kraftfahrzeug, umfassend zumindest zwei zylinderförmige Drucktankteile (1, 2), wobei der erste Drucktankteil (1) und der zweite Drucktankteil (2) in einem Winkel (α) von 90 Grad zueinander angeordnet sind, wobei die zumindest zwei Drucktankteile (1, 2) ein zusammenhängendes Tankvolumen umschließen, wobei der erste Drucktankteil (1) entlang der Fahrzeugquerrichtung (y) angeordnet ist und der zweite Drucktankteil (2) entlang der Fahrzeuglängsrichtung (x) angeordnet ist, **dadurch gekennzeichnet, dass** im eingebauten Zustand der erste Drucktankteil (1) unter einer Rücksitzbank (5) des Fahrzeuges angeordnet ist, wobei der zweite Drucktankteil (2) zumindest teilweise unter einem Mitteltunnel des Fahrzeuges angeordnet ist oder ein dritter zylinderförmiger Drucktankteil (6) in einem Winkel (β), von 90 Grad, zum ersten Drucktankteil (1) angeordnet ist, wobei der erste, zweite und dritte Drucktankteil (1, 2, 6) ein zusammenhängendes Tankvolumen umschließen und der zweite und der dritte Drucktankteil (2, 6) zumindest teilweise unter Vordersitzen (7) des Fahrzeuges angeordnet sind.

2. Drucktankvorrichtung nach Anspruch 1,
**dadurch gekennzeichnet , dass** an dem ersten oder dem zweiten Drucktankteil (1, 2) eine Zugangseinrichtung (3) zu dem zusammenhängenden Tankvolumen angeordnet ist.

3. Drucktankvorrichtung nach Anspruch 1,
**dadurch gekennzeichnet, dass** der erste und/oder der zweite Drucktankteil (1, 2) im Bereich des Fahrzeugbodens (4) angeordnet sind.

4. Drucktankvorrichtung nach Anspruch 1,
**dadurch gekennzeichnet, dass** zumindest einer der zumindest zwei Drucktankteile (1, 2) mindestens eine Ausprägung (9) aufweist, insbesondere zur Aufnahme eines Fahrzeugsitzes.

5. Drucktankvorrichtung nach Anspruch 1,
**dadurch gekennzeichnet , dass** die Drucktankvorrichtung einen Zusatztank (8) umfasst, welcher ein Tankvolumen umschließt das vom Tankvolumen des ersten und zweiten Drucktankteils (1, 2) getrennt ist.

6. Drucktankvorrichtung nach Anspruch 5,
**dadurch gekennzeichnet, dass** der Zusatztank (8) eine längliche Form, beispielsweise Zylinder- oder Quaderform aufweist und parallel zum ersten Drucktankteil (1) angeordnet ist, insbesondere dass der Zusatztank (8) am ersten Drucktankteil (1) anliegend angeordnet ist.

## Claims

1. Pressure tank device for a motor vehicle, comprising at least two cylindrical pressure tank parts (1, 2), wherein the first pressure tank part (1) and the second pressure tank part (2) are arranged at an angle (α) of 90 degrees to each other, wherein the at least two pressure tank parts (1, 2) enclose a continuous tank volume, wherein the first pressure tank part (1) is arranged along the transverse direction (y) of the vehicle and the second pressure tank part (2) is arrange along the longitudinal direction (x) of the vehicle, **characterized in that**, in the installed state, the first pressure tank part (1) is arranged under a rear seat bench (5) of the vehicle, wherein the second pressure tank part (2) is at least partially arranged under a centre tunnel of the vehicle, or a third cylindrical pressure tank part (6) is arranged at an angle (β) of 90 degrees to the first pressure tank part (1), wherein the first, second and third pressure tank parts (1, 2, 6) enclose a continuous tank volume, and the second and the third pressure tank parts (2, 6) are at least partially arranged under front seats (7) of the vehicle.

2. Pressure tank device according to Claim 1, **characterized in that** an access device (3) to the continuous tank volume is arranged on the first or the second pressure tank part (1, 2).

3. Pressure tank device according to Claim 1, **characterized in that** the first and/or the second pressure tank part(s) (1, 2) are/is arranged in the region of the vehicle (4).

4. Pressure tank device according to Claim 1, **characterized in that** at least one of the at least two pressure tank parts (1, 2) has at least one stamped portion (9), in particular for receiving a vehicle seat.

5. Pressure tank device according to Claim 1, **characterized in that** the pressure tank device comprises an additional tank (8) which encloses a tank volume which is separated from the tank volume of the first and second pressure tank parts (1, 2).

6. Pressure tank device according to Claim 5, **characterized in that** the additional tank (8) has an elongate shape, for example a cylinder shape or square shape, and is arranged parallel to the first pressure tank part (1), in particular **in that** the additional tank (8) is arranged bearing against the first pressure tank part (1).

## Revendications

1. Dispositif de réservoir sous pression pour un véhicule automobile, comportant au moins deux parties de réservoir sous pression (1, 2) cylindriques, la première partie de réservoir sous pression (1) et la deuxième partie de réservoir sous pression (2) étant disposées suivant un angle (α) de 90 degrés l'une par rapport à l'autre, les au moins deux parties de réservoir sous pression (1, 2) entourant un volume de réservoir continu, la première partie de réservoir sous pression (1) étant disposée le long de la direction transversale du véhicule (y) et la deuxième partie de réservoir sous pression (2) étant disposée le long de la direction longitudinale du véhicule (x), **caractérisé en ce qu'**à l'état installé, la première partie de réservoir sous pression (1) est disposée en dessous d'une banquette arrière (5) du véhicule, la deuxième partie de réservoir sous pression (2) étant disposée au moins partiellement en dessous d'un tunnel central du véhicule ou une troisième partie de réservoir sous pression (6) cylindrique étant disposée suivant un angle (β) de 90 ° par rapport à la première partie de réservoir sous pression (1), les première, deuxième et troisième parties de réservoir sous pression (1, 2, 6) entourant un volume de réservoir continu et la deuxième et la troisième partie de réservoir sous pression (2, 6) étant disposées au moins partiellement en dessous de sièges avant (7) du véhicule.

2. Dispositif de réservoir sous pression selon la revendication 1,
**caractérisé en ce qu'**un dispositif d'accès (3) au volume de réservoir continu est disposé sur la première ou la deuxième partie de réservoir sous pression (1, 2).

3. Dispositif de réservoir sous pression selon la revendication 1,
**caractérisé en ce que** la première et/ou la deuxième partie de réservoir sous pression (1, 2) sont disposées dans la région du plancher du véhicule (4).

4. Dispositif de réservoir sous pression selon la revendication 1,
**caractérisé en ce qu'**au moins l'une des au moins deux parties de réservoir sous pression (1, 2) comprend au moins une empreinte (9), en particulier pour la réception d'un siège de véhicule.

5. Dispositif de réservoir sous pression selon la revendication 1,
**caractérisé en ce que** le dispositif de réservoir sous pression comporte un réservoir auxiliaire (8), lequel entoure un volume de réservoir qui est séparé du volume de réservoir de la première et de la deuxième partie de réservoir sous pression (1, 2).

6. Dispositif de réservoir sous pression selon la revendication 5,
**caractérisé en ce que** le réservoir auxiliaire (8) présente une forme allongée, par exemple une forme cylindrique ou parallélépipédique et est disposé parallèlement à la première partie de réservoir sous pression (1), en particulier **en ce que** le réservoir auxiliaire (8) est disposé de manière adjacente à la première partie de réservoir sous pression (1).
